Europäisches Patentamt

European Patent Office

Office européen des brevets

(11) Veröffentlichungsnummer: **0 476 600 A1**

# (12) EUROPÄISCHE PATENTANMELDUNG

(21) Anmeldenummer: **91115790.7**

(22) Anmeldetag: **18.09.91**

(51) Int. Cl.5: **B60R 1/06**

(30) Priorität: **21.09.90 DE 4029890**

(43) Veröffentlichungstag der Anmeldung:
**25.03.92 Patentblatt 92/13**

(84) Benannte Vertragsstaaten:
**DE ES FR GB IT**

(71) Anmelder: **MEKRA Rangau Plastics GmbH & Co KG**
**Schuckertstrasse 12-20**
**W-8510 Fürth/Bay. 18(DE)**

(72) Erfinder: **Lang, Heinrich**
**Seenheimerstrasse 101a**
**W-8531 Ergersheim(DE)**
Erfinder: **Seiboth, Wolfgang**
**Danziger Ring 55**
**W-8532 Bad Windsheim(DE)**

(74) Vertreter: **Rau, Manfred, Dr. Dipl.-Ing. et al**
**Rau & Schneck, Patentanwälte Königstrasse 2**
**W-8500 Nürnberg 1(DE)**

(54) **Rückblick-Einrichtung für Kraftfahrzeuge.**

(57) Eine Rückblick-Einrichtung für Kraftfahrzeuge, und zwar insbesondere Nutzfahrzeuge, weist mindestens einen Außenspiegel (1) mit einem Gehäuse (2) und mindestens einer im Gehäuse (2) angeordneten verschwenkbaren Spiegelscheibe (3, 4) auf. Es sind elektrische Verstell-Motore (9, 10, 11, 12) zum Verschwenken der Spiegelscheiben (3, 4) um eine Verstellachse (5, 6, 7, 8) vorgesehen. Weiterhin sind gegebenenfalls Heizungen (13, 14) für die Spiegelscheibe (3, 4) vorhanden. Zur Betätigung der Verstell-Motoren (9, 10, 11, 12) und der Heizung (13, 14) sind Schalter (24, 23) vorgesehen. Um den Verdrahtungsaufwand zu verringern und eine Nachrüstung von verstellbaren Spiegelscheiben (3, 4) mit Verstell-Motoren (9, 10, 11, 12) zu ermöglichen, sind die Schalter (24, 23) auf eine Sende-Einheit (17) und die Verstell-Motoren (9, 10, 11, 12) auf eine im Gehäuse (2) angeordnete Empfangs-Einheit (20) eines Multiplex-Systems geschaltet.

FIG.1

Die Erfindung betrifft eine Rückblick-Einrichtung nach dem Oberbegriff des Anspruches 1.

Derartige Rückblick-Einrichtungen, insbesondere für Nutzfahrzeuge, weisen in der Regel für jede Spiegelscheibe eines Außenspiegels zwei Verstell-Motoren auf, um Verstellungen um eine horizontale und/oder eine vertikale Verstell-Achse zu ermöglichen. Der oder die zugeordneten Betätigungsschalter befinden sich in der Fahrerkabine bzw. im Fahrgastraum des Kraftfahrzeuges. In gleicher Weise sind die Spiegelscheiben üblicherweise mit einer Heizung versehen, die ebenfalls über einen Ein-Aus-Schalter vom Innenraum der Fahrerkabine aus betätigt wird. Schließlich sind die Gehäuse der Außenspiegel in manchen Ländern noch mit einer zusätzlichen Leuchte versehen, die ebenfalls über einen Ein-Aus-Schalter von der Fahrerkabine aus betätigt wird. Diese zahlreichen elektrischen Verbraucher in dem Außenspiegel oder in den Außenspiegeln bedingen relativ dicke und aufwendige Kabelstränge zwischen den Schaltern in der Fahrerkabine und den außerhalb der Fahrerkabine in dem oder den Außenspiegeln befindlichen elektrischen Verbrauchern. Dies ist zum einen kostenaufwendig, und zum anderen erschwert es eine Nachrüstung eines Kraftfahrzeuges mit elektrisch verstellbaren Außenspiegeln, wenn das entsprechende Kraftfahrzeug zuvor lediglich mit einem oder mehreren von Hand verstellbaren, aber beheizbaren Außenspiegeln versehen war.

Der Erfindung liegt daher die Aufgabe zugrunde, eine Rückblick-Einrichtung der gattungsgemäßen Art so auszugestalten, daß kostenaufwendige Kabelstränge vermieden und eine Nachrüstung mit elektrisch verstellbaren Außenspiegeln möglich ist.

Diese Aufgabe wird erfindungsgemäß durch die Merkmale im Kennzeichnungsteil des Anspruches 1 gelöst. Nach der Erfindung ist ein Multiplex-System vorgesehen, das lediglich ein oder maximal zwei elektrische Leitungen zwischen einer in der Fahrerkabine befindlichen Betätigungseinheit und einem Außenspiegel mit beliebig vielen elektrischen Verbrauchern notwendig macht. Da dicke Kabelstränge sehr kostenaufwendig sind, ist auch bei einer Erstausrüstung des Kraftfahrzeuges ein Kostenvorteil gegeben, da die Sende-Einheit und die Empfangs-Einheit nicht kostenaufwendiger sind als die Kabelstränge. Auch die Herstellung des Kraftfahrzeuges ist vereinfacht, da eine Entscheidung, ob motorisch verstellbare Außenspiegel eingesetzt werden oder nicht, erst getroffen werden muß, wenn das Fahrzeug praktisch bereits fertig produziert ist, da jeweils nur eine oder maximal zwei Leitungen für jeden Außenspiegel vorgesehen sein müssen. Eine Nachrüstung ist ebenfalls in einfacher Weise möglich, zumal in der Regel eine oder zwei Leitungen zu einem Außenspiegel ohnehin vorhanden sind, da diese regelmäßig beheizbar ausgebildet sind, auch wenn sie lediglich von Hand verstellbar sind. Es ist also möglich, alle in einem Außenspiegel angeordneten elektrischen Verbraucher über nur ein Leitungspaar anzusteuern und gleichzeitig mit Strom zu versorgen.

Anspruch 2 gibt eine Ausgestaltung wieder, wenn die übliche Ausgestaltung motorisch verstellbarer Außenspiegel, die jeweils zwei Verstell-Motoren pro Spiegelscheibe aufweisen, vorgesehen ist.

Durch die Ausgestaltung nach Anspruch 3 wird erreicht, daß mit nur einer einzigen Betätigungseinheit mit einer einzigen Sende-Einheit zwei Außenspiegel mit jeweils einer Empfangs-Einheit unabhängig voneinander angesteuert werden können. Die Ansprüche 4 und 5 geben an, wie eine Heizung der mindestens einen Spiegelscheibe und gegebenenfalls eine zusätzliche Leuchte über das Multiplex-System ansteuerbar sind.

Durch die Weiterbildung nach Anspruch 6 kann das Multiplex-System zusätzlich noch mit einem Memory-System gekoppelt werden, das es mehreren Fahrern ermöglicht, die für sie richtige Einstellung der Spiegelscheibe oder Spiegelscheiben einmal vorzunehmen und diese dann jeweils durch Tastendruck abzurufen und wieder vorzunehmen. In gleicher Weise kann hiermit für einen Fahrer jeweils eine völlig unterschiedliche Stellung der Spiegelscheiben gespeichert und abrufbar gemacht werden, beispielsweise für die normale Fahrt und für Rückwärts-Einparken.

In den Ansprüchen 8 bis 11 ist eine vorteilhafte Weiterbildung des Erfindungsgegenstandes angegeben, die bei Lastzügen bestehend aus einer Zugmaschine und einem Anhänger oder Sattelschleppern ebenfalls mit einer Zugmaschine und einem Auflieger zum Einsatz kommen kann. Diesr Weiterbildung liegt das Problem zugrunde, daß insbesondere bei engen Straßenbiegungen und damit einer starken Einlenkung der Zugmaschine das Ende des Anhängers oder Aufliegers aus dem Sichtbereich des entsprechenden Rückblickspiegels gelangt. Damit kann über die Spiegel nicht mehr kontrolliert werden, ob vom Ende des Anhängers oder Aufliegers beispielsweise die Bordsteinkante oder andere Hindernisse überfahren werden. Die Folge ist, daß der Fahrer versuchen muß, durch direkten Blickkontakt das Ende des Anhängers oder Aufliegers einzusehen, was deren Sicherheit und Bequemlichkeit abträglich ist.

Die grundsätzliche Lösung dieses Problems ist im Kennzeichnungsteil des Anspruches 8 angegeben. Demnach ist die Sende-Einheit des Multiplex-Systems mit einer den Winkel zwischen den fahrtdes Multiplex-Systems mit einer den Winkel zwischen den fahrtrichtungsparallelen Längsachsen von Zugmaschine und Anhänger oder Auflieger erfassenden Winkelerfassungseinrichtung versehen, mittels derer über das Multiplex-System die Stellung des oder der entsprechenden Rückblickspiegel entsprechend dem Winkel zwischen den beiden Fahrzeugteilen automatisch korrigierbar ist. Die Spiegel oder Spiegelscheiben werden also um ihre Vertikalachse entsprechend dem Winkel zwischen den beiden Fahrzeugteilen nachgeführt, womit insbesondere auch beim Umfahren enger Straßenbiegungen bzw. beim Rangieren das Ende des Anhängers oder Auflegers über den entsprechenden Rückblickspiegel eingesehen werden kann. Das Nachführen kann dabei kontinuierlich oder in Schritten von beispielsweise jeweils 10° erfolgen.

Die Ansprüche 9 bis 11 geben vorteilhafte Weiterbildungen der Winkelerfassungseinrichtung an, deren nähere Ausgestaltung und Vorteile dem Ausführungsbeispiel entnehmbar sind.

Sogenannte Multiplex-Systeme sind bei Kraftfahrzeugen bekannt und zwar beispielsweise durch die DE 25 06 073 C2. Hierbei ist innerhalb eines Kraftfahrzeuges eine Ringleitung vorgesehen, der eine Sende-Einheit zugeordnet ist. Jedem Verbraucher ist eine Empfangs-Einheit zugeordnet. Die in der Sende-Einheit kodierten Befehle, die über zahlreiche Betätigungsschalter eingegeben werden, werden in der dem zugeordneten Verbraucher vorgeschalteten Empfangs-Einheit dekodiert, so daß der entsprechende Verbraucher angesteuert wird. Derartige Multiplex-Systeme haben zwar nur eine Sende-Einheit; sie haben in der Regel aber so viele Empfangs-Einheiten wie Verbraucher. Das Ansteuern mehrerer Verbraucher über eine Empfangs-Einheit ist hierbei nicht möglich. Weiterhin bricht bei einem Zusammenbruch des Multiplex-Systems die elektrische Versorgung des gesamten Kraftfahrzeuges zusammen. Demgegenüber ist die elektrische Versorgung der Außenspiegel eines Kraftfahrzeuges für die Betriebssicherheit des Kraftfahrzeuges nicht wesentlich, da die Außenspiegel zusätzlich immer noch von Hand verstellbar sind. Diese Handverstell-Möglichkeit ist über Rutschkupplungen sichergestellt, die bei elektrisch betätigbaren Außenspiegeln ganz generell vorgesehen sind.

Weitere Vorteile und Merkmale der Erfindung ergeben sich aus der nachfolgenden Beschreibung von drei Ausführungsformen der Erfindung anhand der Zeichnung. Es zeigt

Fig. 1    einen Außenspiegel mit zwei Spiegelscheiben und einer Betätigungs-Einheit,

Fig. 2    zwei Außenspiegel mit jeweils einer Spiegelscheibe und einer gemeinsamen Betätigungs-Einheit,

Fig. 3    einen Außenspiegel mit einer Betätigungs-Einheit entsprechend Fig. 1, wobei zusätzlich noch ein Memory-System für die Spiegelstellung vorgesehen sind,

Fig. 4    einen Außenspiegel mit einer Betätigungs-Einheit mit Memory-System entsprechend Fig. 3, wobei zusätzlich noch Teile einer Korrekturvorrichtung für die Spiegelstellung vorgesehen sind, und

Fig. 5    eine schematische Draufsicht auf einen Sattelschlepper mit weiteren Teilen der Korrekturvorrichtung.

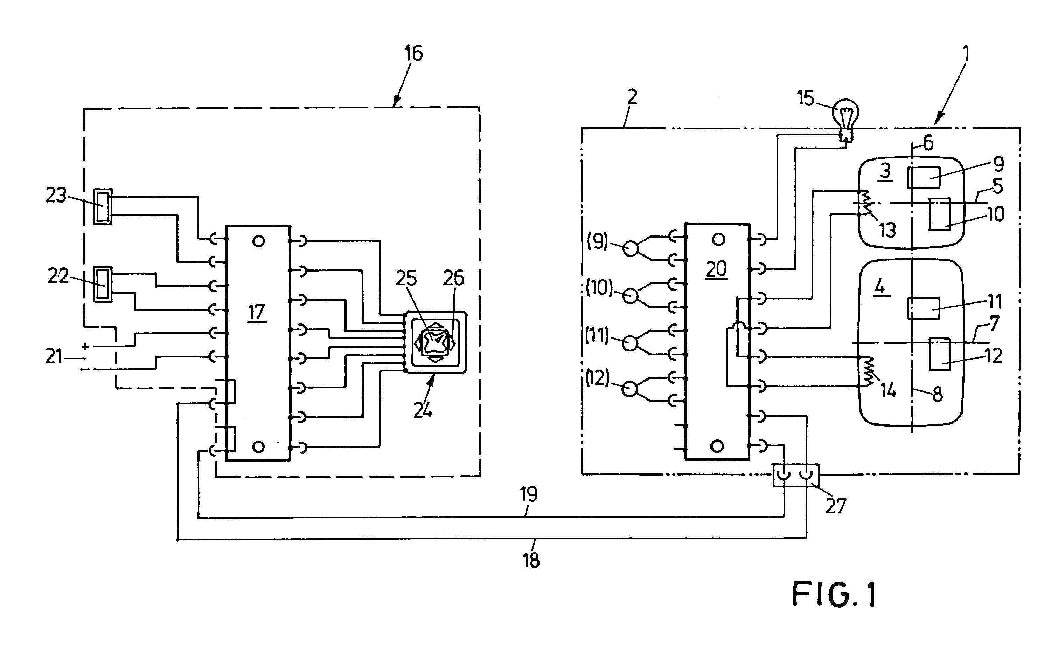

Die in Fig. 1 dargestellte Ausführungsform zeigt in schematischer Darstellung einen Außenspiegel 1 für Nutzfahrzeuge, insbesondere also Lastkraftwagen, dessen Gehäuse 2 nur durch eine strich-doppelpunktierte Linie angedeutet ist. Der Außenspiegel weist zwei Spiegelscheiben 3, 4 auf, die um Verstellachsen 5, 6 bzw. 7, 8 verstellbar sind. Zur Verstellung jeder Spiegelscheibe 3 bzw. 4 um ihre beiden Verstellachsen 5, 6 bzw. 7, 8 ist jeweils ein Verstell-Motor 9, 10 bzw. 11, 12 vorgesehen. Der Verstell-Motor 9 dient zur Verschwenkung der Spiegelscheibe 3 um ihre horizontale Verstellachse 5, d.h. er schwenkt die Spiegelscheibe 3 vertikal. Der Verstell-Motor 10 dient zur Verschwenkung der Spiegelscheibe 3 um ihre vertikale Verstellachse 6, d.h. er verschwenkt die Spiegelscheibe 3 horizontal. Entsprechend dient der Verstell-Motor 11 zur Verschwenkung der Spiegelscheibe 4 um ihre horizontale Verstellachse 7, d.h. er verschwenkt die Spiegelscheibe 4 vertikal. Schließlich dient der Verstell-Motor 12 zur Verschwenkung der Spiegelscheibe 4 um die vertikale Verstellachse 8, d.h. er verschwenkt die Spiegelscheibe 4 horizontal.

Die Spiegelscheibe 3 ist in üblicher Weise mit einer Heizung 13 versehen, während die Spiegelscheibe 4 mit einer Heizung 14 versehen ist. An der Oberseite des Gehäuses kann - wie in einigen Ländern vorgeschrieben - eine Leuchte 15 vorgesehen sein. Derartige Außenspiegel sind in der Praxis bekannt und beispielsweise in der deutschen Patentanmeldung DE 40 10 083 A dargestellt und beschrieben.

Zur Ansteuerung der Verstell-Motoren 9 bis 12, der Heizungen 13, 14 und der Leuchte 15 ist ein Multiplex-System vorgesehen. Diese weist eine im Fahrerhaus des Nutzfahrzeuges anzuordnende Betätigungs-Einheit 16 auf, die in Fig. 1 gestrichelt umrandet ist. Die Betätigungs-Einheit 16 weist als Kernstück eine Sende-Einheit 17 auf, die über einen lediglich aus zwei elektrischen Leitungen 18, 19 bestehenden Datenbus mit einer im Gehäuse 2 angeordneten Empfangs-Einheit 20 verbunden ist. Auf entsprechende Eingänge der Sende-Einheit 17 ist eine Stromversorgung 21 mit der in derartigen Fahrzeugen üblichen Spannung von 12 oder 24 Volt geschaltet. Weiterhin sind auf entsprechende Eingänge der Sende-Einheit 17 ein Ein-Aus-Schalter 22 für die Leuchte 15 und ein Ein-Aus-Schalter 23 für die Heizungen 13, 14 geschaltet. Weiterhin ist auf entsprechende Eingänge der Sende-Einheit 17 ein Spiegel-Schalter 24 geschaltet, der einen Dreh-Schalter 25 zur Auswahl der Spiegelscheibe 3 bzw. 4 und einen in zwei Koordinatenrichtungen verschiebbaren Schiebeschalter 26 zur Betätigung der der jeweils ausgewählten Spiegelscheibe 3 bzw. 4 zugeordneten Verstell-Motoren 9, 10 bzw. 11, 12 aufweist. Der Dreh-Schalter 25 und der Schiebe-Schalter 26 sind ineinander integriert. Wenn - wie in Fig. 1 angedeutet - durch den Dreh-Schalter 25 die Betätigung der oberen Spiegelscheibe 3 ausgewählt ist, dann wird durch Verschiebung des SchiebeSchalters 26 in horizontaler Richtung der Verstell-Motor 10 angesteuert und verschwenkt den Spiegel um die Verstellachse 6. Wenn dagegen der Schiebe-Schalter 26 in vertikaler Richtung verschoben wird, dann wird entsprechend die Spiegelscheibe 3 um ihre horizontale Verstellachse 5 verschwenkt. Die über die Schalter 22, 23, 25, 26 auf die Sende-Einheit 17 gegebenen elektrischen Signale werden in der Sende-Einheit 17 kodiert und zusammen mit der Versorgungsspannung über die den Datenbus bildenden Leitungen 18, 19 auf die Empfangs-Einheit 20 im Gehäuse 2 gegeben. Hier wird entsprechend den kodierten Signalen dann eine entsprechende Stromversorgung der Leuchte 15, der Heizungen 13, 14 oder der Verstell-Motoren 9 bis 12 in der geschilderten Weise ausgelöst. In Fig. 1 sind die Verstell-Motoren 9, 10, 11, 12 als Sinnbilder auf der linken Seite der Empfangs-Einheit 20 des Multiplex-Systems dargestellt, um die Darstellung der Leitungszuführungen zu den Verstell-Motoren 9 bis 12 übersichtlicher zu gestalten. Die Leitungen 18, 19 sind über eine Steckverbindung 27 im Gehäuse 2 an die Empfangs-Einheit 20 angeschlossen bzw. anschließbar.

Auch wenn die Schalter 22, 23, 24 in Fig. 1 mit in die Umrandung der Betätigungseinheit 16 einbezogen sind, so heißt dies nicht, daß sie mit der Sende-Einheit 17 eine räumlich geschlossene Einheit bilden müssen; vielmehr befinden sich die Schalter 22, 23, 24 im Fahrerhaus an einer für den Fahrer zugänglichen Stelle, während üblicherweise die Sende-Einheit 17 und die gesamten nicht im einzelnen bezeichneten Leitungen innerhalb des Armaturenbrettes, also außerhalb des Sichtfeldes angeordnet sind.

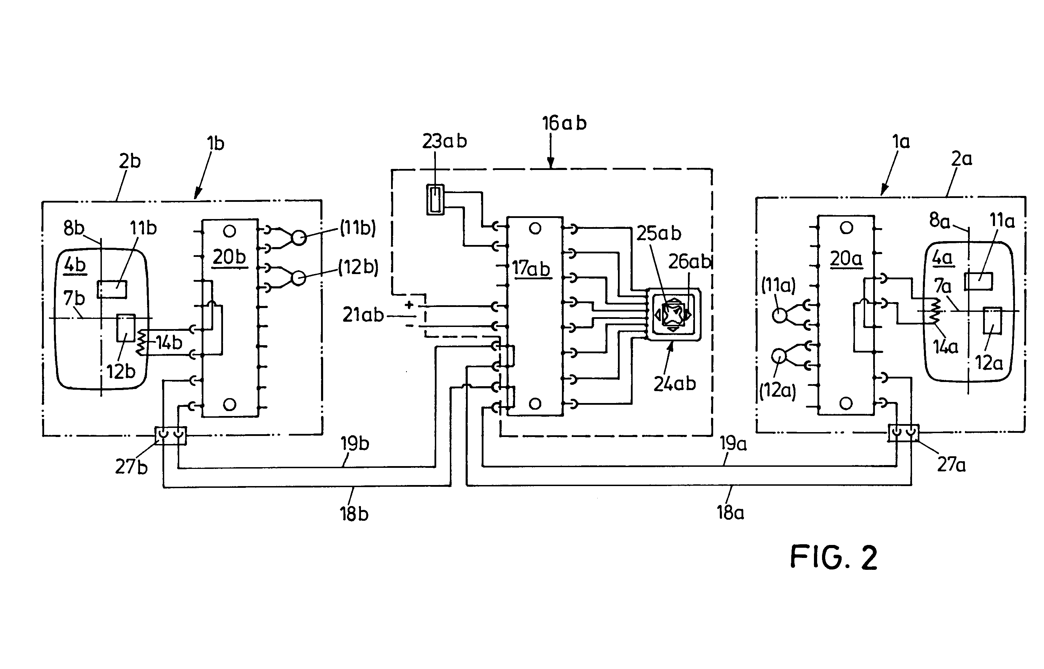

Die Ausführungsform nach Fig. 2 unterscheidet sich von der nach Fig. 1 dadurch, daß zwei Außen-spiegel 1a und 1b vorgesehen sind, die jeweils ein Gehäuse 2a, 2b aufweisen, wobei in dem Gehäuse 2a bzw. 2b jeweils nur eine - große - Spiegelscheibe 4a, 4b vorgesehen ist, die von Verstell-Motoren 11a, 12a bzw. 12b, 12b in der bereits geschilderten Weise verstellbar ist. Alle mit Fig. 1 weitgehend oder vollständig übereinstimmenden Teile der bei-den Außenspiegel 1a, 1b sind jeweils mit der selben Bezugsziffer wie in Fig. 1 unter Hinzufügung eines "a" oder "b" bezeichnet, ohne daß es insoweit einer erneuten Beschreibung bedürfte. Soweit in der Betätigungs-Einheit 16ab mit Fig. 1 identische oder gleichartige Teile vorhanden sind, sind diese mit der selben Bezugsziffer unter Hinzufügung eines "ab" bezeichnet.

In der Betätigungs-Einheit 16ab ist ein Spiegel-Schalter 24ab mit einem Dreh-Schalter 25ab und einem Schiebe-Schalter 26ab vorgesehen, wobei der Dreh-Schalter 25ab in diesem Fall zur Um-schaltung vom Außenspiegel 1a auf den Außen-spiegel 1b und umgekehrt dient. Ansonsten ist die Funktion identisch zu der der Ausführungsform nach Fig. 1. Die Sende-Einheit 17ab erhält ihre Steuersignale von dem Spiegel-Schalter 24ab bzw. dem Ein-Aus-Schalter 23ab für die Heizung 14a, 14b. Die in der Sende-Einheit 17ab kodierten Signale gehen entsprechend über die Leitungen 18a, 19a, die einen Datenbus für die Empfangs-Einheit 20a des Außenspiegels 1a bilden, bzw. die Leitun-gen 18b, 19b, die einen Datenbus für die Empfangs-Einheit 20b des Außenspiegels 1b bil-den, zu der jeweiligen Empfangs-Einheit 20a bzw. 20b. In diesem Fall sind also zwei Datenbusse 18a, 19a bzw. 18b, 19b vorhanden, die von einer Sende-Einheit 17ab versorgt werden und die zu voneinander unabhängigen Empfangs-Einheiten 20a, 20b führen. Dort werden die kodierten Signale wieder entsprechend umgewandelt, so daß entweder die Heizungen 14a bzw. 14b oder die Verstell-Motoren 11a, 12a bzw. 11b, 12b angesteuert wer-den.

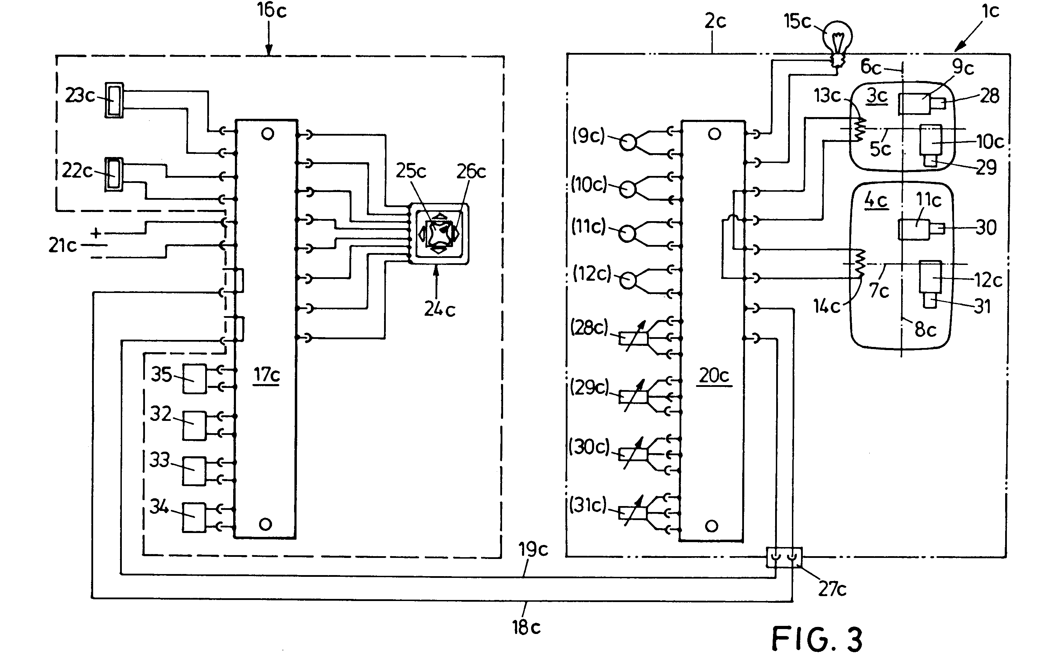

Die Fig. 3 zeigt eine dritte Ausführungsform, die einen Außenspiegel 1c aufweist, der dem nach Fig. 1 weitestgehend identisch ist. Er unterscheidet sich einschließlich der Betätigungs-Einheit 16c nur dadurch von der Ausführungsform nach Fig. 1, daß das Multiplex-System zusätzlich mit einer Memory-Schaltung versehen ist. Insofern bedarf es keiner erneuten Beschreibung aller mit Fig. 1 übereinstimmenden Teile, die mit der selben Bezugsziffer unter Hinzufügung eines c bezeichnet sind. Die Verstell-Motoren 9c, 10c, 11c, 12c sind mit einem Drehstellungsgeber 28, 29, 30, 31 versehen, der die Drehstellung des entsprechenden Motors 9c, 10c, 11c, 12c erfaßt. Er gibt ein entsprechendes Signal auf die Empfangs-Einheit 20c. Derartige Drehstellungsgeber können durch Drehpotentiometer, Schiebepotentiometer oder aber auch digital arbeitende Impulsgeber gebildet sein.

Die von diesen Drehstellungsgebern 28, 29, 30, 31 erzeugten Drehstellungssignale werden über die durch die Leitungen 18c, 19c gebildeten Datenbusse zur Sende-Einheit 17c zurückgegeben. Diese Signale können in der Sende-Einheit 17c gespeichert werden und zwar durch entsprechende Betätigung einer einen Speicherplatz auswählenden Speicherplatztaste 32 oder 33 oder 34 und eines den Speichervorgang auslösenden Speicher-Schalters 35. Mit der geschilderten Ausführungsform nach Fig. 3 kann also zum einen über den Datenbus 18c, 19c eine Verstellung bzw. Einstellung der Spiegelscheiben 3c bzw. 4c durchgeführt werden. Ein Fahrer kann diese Einstellung beispielsweise über die Speicherplatztaste 32 auf dem dieser zugeordneten Speicherplatz speichern. Wenn zwischenzeitlich die Spiegelscheiben 3c, 4c verstellt worden sind, dann kann durch einfache Betätigung der Speicherplatztaste 32 wieder die entsprechende Einstellung aufgerufen und durchgeführt werden. So kann mehreren Fahrern durch die Speicherplatztasten 32, 33, 34 jeweils eine Einstellung der Spiegelscheiben 3c, 4c zugeordnet und in einfacher Weise wieder eingestellt werden.

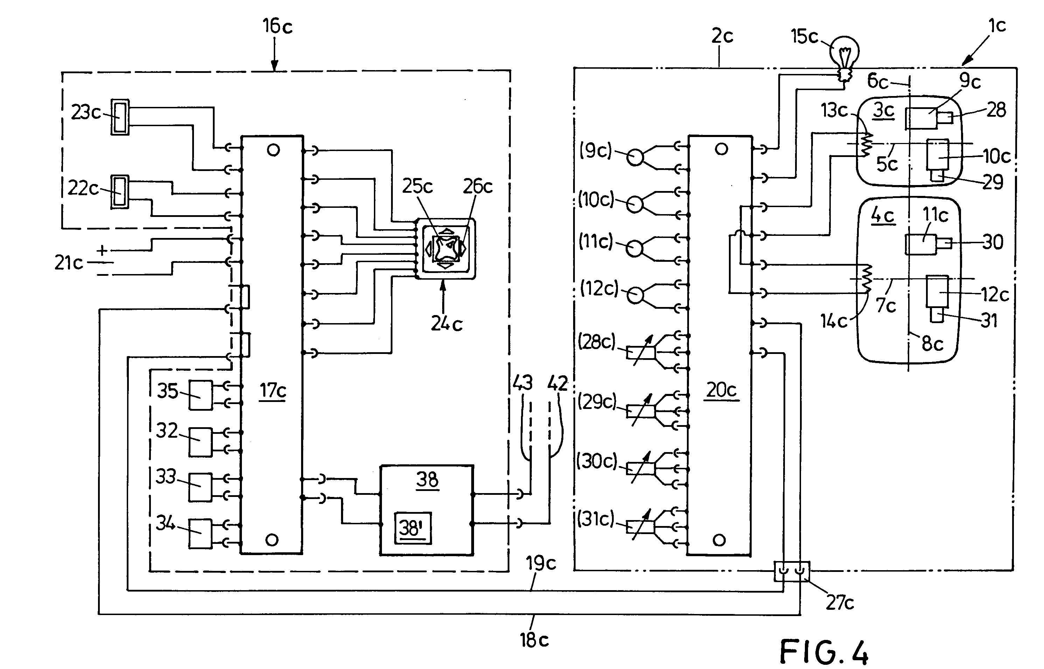

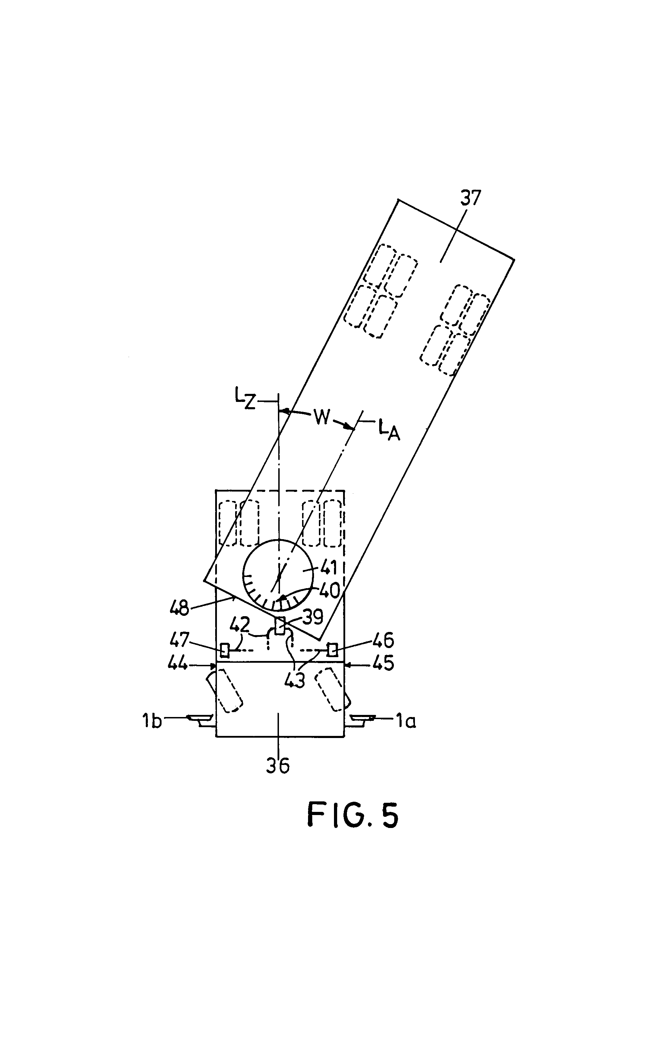

Aus den Fig. 4 und 5 wird eine weitere vorteilhafte Zusatzeinrichtung für die Rückblick-Einrichtung deutlich, die bei einem Fahrzeug mit Anhänger und insbesondere einem Lastzug mit Zugmaschine und Anhänger bzw. bei einem Sattelschlepper mit Zugmaschine und Aufleger zum Einsatz kommt. Es handelt sich dabei um eine mit der Sende-Einheit 17c des Multiplex-Systems verbundene Winkelerfassungseinrichtung, mittels derer über das Multiplex-System die Stellung des oder der Spiegelscheiben 3c, 4c entsprechend dem Winkel W zwischen den fahrtrichtungsparallelen Längsachsen $L_z, L_A$, von Zugmaschine 36 und Aufleger 37 korrigierbar ist.

Die Winkelerfassungseinrichtung besteht aus einem auf eine Winkeländerung zwischen der Zugmaschine 36 und dem Aufleger 37 ansprechenden Winkelgeber und einer Auswerteeinheit 38. Der Winkelgeber ist mit dem Eingang der Auswerteeinheit 38 verbunden, die mit ihrem Ausgang mit der Sende-Einheit 17c des Multiplex-Systems zur Spiegelsteuerung verbunden ist (Fig. 4).

In Fig. 5 sind zwei Alternativen für den Winkelgeber schematisch angedeutet, die wahlweise zum Einsatz kommen können. Es kann sich einerseits um einen Inkrementalgeber 39 auf elektrooptischer Basis handeln, mit dessen Hilfe eine Winkelmarkierung 40 im Bereich des Drehtellers 41 des Auflegers 37 ablesbar ist. Beim Einlenken der Zugmaschine 36 und beim dementsprechenden Vergrößern des Winkels W zwischen Aufleger 37 und Zugmaschine 36 laufen die Winkelmarkierungen 40 am elektrooptischen Inkrementalgeber 39 vorbei, dieser erzeugt elektrische Signale, die über die Verbindungsleitungen 42, 43 der Auswerteeinheit 38 zugeführt werden. Diese ermittelt aus den impulsförmigen Signalen entsprechende Steuersignale für die Korrektur der Spiegelstellung, die ähnlich der Funktion der Speicherplatztasten 32, 33, 34 aus einer Speichereinrichtung 38' in die Sende-Einheit 17c eingespeist und über die Leitungen 18c, 19c an die Empfangs-Einheit 20c weitergeleitet werden. Wird zum Beispiel ein Winkel W von 20° registriert, so dreht sich die Spiegelscheibe 4c gesteuert über das Multiplex-System um einen entsprechenden Winkel um ihre vertikale Verstellachse 8c nach außen.

Der Winkelgeber ist in einer alternativen Ausführungsform durch zwei jeweils im Bereich der einander abgewandten Längsseiten 44, 45 der Zugmaschine 36 angeordnete Abstandssensoren 46, 47 gebildet. Die beiden Abstandssensoren 46, 47 messen den jeweiligen Abstand zwischen den beiden seitlichen, den Längsseiten 44, 45 benachbarten Bereichen der Vorderseite 48 des Auflegers 37 und den Abstandssensoren 46, 47. Die Abstandssensoren 46, 47 können dabei Ultraschall- oder Infrarot-Sensoren sein. Diese erzeugen ein dem jeweiligen Abstand proportionales Signal, das über die Verbindungsleitungen 42 bzw. 43 der Auswerteeinheit 38 zugeführt wird. Diese berechnet aus den unterschiedlichen gemessenen Abständen den Winkel W und generiert wiederum ein entsprechendes Steuersignal für die Sende-Einheit 17c, das wiederum der Empfangs-Einheit 20c zur Nachführung der Spiegelscheibe 4c zugeführt wird.

Es ist darauf hinzuweisen, daß die Auswerteeinheit 38 auch in die Sende-Einheit 17c integriert sein kann.

Zu den Fig. 1 bis 4 bleibt nachzutragen, daß der aus den beiden Leitungen 18, 18a, 18b, 18c, 19, 19a, 19b, 19c bestehende Datenbus aus einer Masseleitung 18, 18a, 18b, 18c und einer Versorgungsleitung 19, 19a, 19b, 19c gebildet sein kann, wobei die in Form eines frequenzmodulierten Spannungssignals zwischen Multiplex-Sende 17, 17ab, 17c und -Empfangseinheiten 20, 20a, 20b, 20c übertragenen Datensignale über die Masseleitung 18, 18a, 18b, 18c gesendet werden. Eine Datenübertragung über die Versorgungsleitung 19, 19a, 19b, 19c ist jedoch ebenfalls möglich.

Zusammenfassend wird durch das erfindungsgemäß vorgesehene Multiplex-Datenübertragungssystem ein modulares System geschaffen, daß es erlaubt, unter Beibehaltung von nur zwei Verbindungsleitungen sehr unterschiedlich ausgerüstete Rückblick-Einrichtungen an Kraftfahrzeugen anzusteuern. Da dabei keine sicherheitsrelevanten Bauteile des Fahrzeuges betroffen sind, kann das Multiplex-System sehr einfach und ohne aufwendige Redundanzeinrichtungen aufgebaut sein.

**Patentansprüche**

1.  Rückblick-Einrichtung für Kraftfahrzeuge mit mindestens einem Außenspiegel (1, 1a, 1b, 1c) mit einem Gehäuse (2, 2a, 2b, 2c), mit mindestens einer verschwenkbaren Spiegelscheibe (3, 4; 4a, 4b; 3c, 4c), mit mindestens einem elektrischen Verstell-Motor (9, 10, 11, 12; 11a, 11b, 12a, 12b; 9c, 10c, 11c, 12c) zum Verschwenken mindestens der Spiegelscheibe (3, 4; 4a, 4b; 3c, 4c) um eine Verstellachse (5, 6, 7, 8; 7a, 7b, 8a, 8b; 5c, 6c, 7c, 8c), mit einem vom Gehäuse (2, 2a, 2b, 2c) entfernten Spiegel-Schalter (24, 24ab, 24c) zum Verbinden des mindestens einen Verstell-Motors (9, 10, 11, 12; 11a, 11b, 12a, 12b; 9c, 10c, 11c, 12c) mit einer Stromversorgungsquelle (21, 21ab, 21c) über mindestens eine elektrische Leitung (18, 19; 18a, 19a, 18b, 19b; 18c, 19c), dadurch gekennzeichnet, daß der Spiegel-Schalter (24, 24ab, 24c) auf eine Sende-Einheit (17, 17ab, 17c) und der mindestens eine Verstell-Motor (9, 10, 11, 12; 11a, 11b, 12a, 12b; 9c, 10c, 11c, 12c) auf eine im Gehäuse (2, 2a, 2b, 2c) angeordnete Empfangs-Einheit (20; 20a, 20b; 20c) eines Multiplex-Systems geschaltet sind und daß die mindestens eine elektrische Leitung (18, 19; 18a, 19a, 18b, 19b; 18c, 19c) als Datenbus zwischen Sende-Einheit (17, 17ab, 17c) und Empfangs-Einheit (20; 20a, 20b; 20c) ausgebildet ist.

2. Rückblick-Einrichtung nach Anspruch 1, dadurch gekennzeichnet, daß für jede Spiegelscheibe (3, 4; 4a, 4b; 3c, 4c) zwei Verstell-Motoren (9, 10, 11, 12; 11a, 11b, 12a, 12b; 9c, 10c, 11c, 12c) vorgesehen sind, die auf die Empfangs-Einheit (20; 20a, 20b; 20c) geschaltet sind.

3. Rückblick-Einrichtung nach Anspruch 1 oder 2, dadurch gekennzeichnet, daß mindestens zwei Außenspiegel (1a, 1b) mit jeweils einer Empfangs-Einheit (20a, 20b) vorgesehen sind, die mit einer gemeinsamen Sende-Einheit (17ab) über Datenbusse (18a, 19a, 18b, 19b) verbunden sind.

4. Rückblick-Einrichtung nach einem der Ansprüche 1 bis 3, dadurch gekennzeichnet, daß mindestens eine Spiegelscheibe (3, 4; 4a, 4b; 3c, 4c) mit einer Heizung (13, 14; 14a, 14b; 13c, 14c) versehen ist, die auf die Empfangs-Einheit (20; 20a, 20b; 20c) geschaltet ist, und daß ein Ein-Aus-Schalter (23, 23ab, 23c) für die Heizung (13, 14; 14a, 14b; 13c, 14c) auf die Sende-Einheit (17, 17ab, 17c) geschaltet ist.

5. Rückblick-Einrichtung nach einem der Ansprüche 1 bis 4 dadurch gekennzeichnet, daß mindestens eine Leuchte (15, 15c) oder andere elektrische Verbraucher am Gehäuse (1, 1c) angebracht und auf die Empfangs-Einheit (20, 20c) geschaltet ist und daß ein Ein-Aus-Schalter (22, 22c) für die Leuchte (15, 15c) auf die Sende-Einheit (17, 17c) geschaltet ist.

6. Rückblick-Einrichtung nach einem der Ansprüche 1 bis 5, dadurch gekennzeichnet, daß der mindestens eine Verstell-Motor (9c, 10c, 11c, 12c) mit einem Drehstellungsgeber (28, 29, 30, 31) verbunden ist, der auf die Empfangs-Einheit (20c) geschaltet ist, und daß die Sende-Einheit (17c) mit mindestens einem über eine Speicherplatztaste (32, 33, 34) und einen Speicherschalter (35) ansteuerbaren Speicherplatz zur Speicherung und wiederholten Ansteuerung einer vorgebbaren Stellung der mindestens einen Spiegelscheibe (3c, 4c) versehen ist.

7. Rückblick-Einrichtung nach einem der Ansprüche 1 bis 6, dadurch gekennzeichnet, daß maximal zwei elektrische Leitungen (18, 19; 18a, 19a, 18b, 19b; 18c, 19c) vorgesehen sind, von denen die erste eine Masseleitung (18, 18a, 18b, 18c) und die zweite eine Versorgungsleitung (19, 19a, 19b, 19c) ist und daß das Multiplex-Signal über eine der beiden Leitungen übertragbar ist.

8. Rückblick-Einrichtung nach einem der Ansprüche 1 bis 7 für eine Zugmaschine (36) mit Anhänger (Sattelaufleger 37), dadurch gekennzeichnet, daß der Sende-Einheit (17c) des Multiplex-Systems eine den Winkel (W) zwischen den fahrtrichtungsparallelen Längsachsen ($L_Z$, $L_A$) von Zugmaschine (36) und Anhänger (Sattelaufleger 37) erfassende Winkelerfassungseinrichtung zugeordnet ist, mittels derer über das Multiplex-System die Stellung des oder der Spiegelscheiben (3c, 4c) entsprechend dem Winkel (W) automatisch korrigierbar ist.

9. Rückblick-Einrichtung nach Anspruch 8, dadurch gekennzeichnet, daß die Winkelerfassungseinrichtung mindestens einen auf eine Winkeländerung zwischen Zugmaschine (36) und Anhänger (Aufleger 37) ansprechenden Winkelgeber und eine damit eingangsseitig verbundene Auswerteeinheit (38) zur Erzeugung von Steuersignalen für die Korrektur der Spiegelstellung aufweist, welche Auswerteeinheit (38) ausgangsseitig mit der Sende-Einheit (17c) verbunden ist.

10. Rückblick-Einrichtung nach Anspruch 9, dadurch gekennzeichnet, daß der Winkelgeber ein Inkrementalgeber (39) ist, mittels dessen eine Winkelmarkierung (40) am Anhänger (Aufleger 37) abtastbar ist.

**11.** Rückblick-Einrichtung nach Anspruch 9, dadurch gekennzeichnet, daß als Winkelgeber zwei jeweils im Bereich der einander abgewandten Längsseiten (44, 45) der Zugmaschine (36) angeordnete Abstandssensoren (46, 47) vorgesehen sind, mittels derer jeweils ein Signal für die Auswerte-Einheit (38) erzeugbar ist, das dem jeweiligen Abstand zwischen den seitlichen, den Längsseiten (44, 45) benachbarten Bereichen der Vorderseite (48) des Anhängers (Auflegers 37) und den Abstandssensoren (46, 47) entspricht.

FIG.1

EP 0 476 600 A1

FIG. 2

EP 0 476 600 A1

FIG. 3

EP 0 476 600 A1

FIG. 4

EP 0 476 600 A1

FIG. 5

# EUROPÄISCHER RECHERCHENBERICHT

**EP 91 11 5790**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 274 848 (BRITAX WINGARD LIMITED) <br> * das ganze Dokument * * | 1-4,6 | B 60 R 1/06 |
| Y | | 5,7-11 | |
| Y | US-A-4 809 137 (YAMADA) <br> * Zusammenfassung; Abbildungen * * | 5 | |
| Y | US-A-4 907 222 (SLAVIK) <br> * Spalte 1 - Spalte 2, Zeile 39 * * | 7 | |
| Y | EP-A-0 361 166 (JUNG, MANFRED) <br> * Ansprüche 1,4,5 * * | 8-10 | |
| Y | FR-A-2 578 046 (RENAULT VEHICULES INDUSTRIELS) <br> * Ansprüche 1-4,7,9,10 * * | 8,9,11 | |
| X | US-A-4 940 322 (HAMAMOTO ET AL.) <br> * Spalte 1 - Spalte 9, Zeile 25; Ansprüche 1-3; Abbildungen 1-4 * * | 1-3,6 | |
| X | WO-A-9 010 555 (ROLTRAMORSE S.P.A.) <br> * das ganze Dokument * * | 1,2,4 | |

**RECHERCHIERTE SACHGEBIETE (Int. Cl.5)**

B 60 R

Der vorliegende Recherchenbericht wurde für alle Patentansprüche erstellt

| Recherchenort | Abschlußdatum der Recherche | Prüfer |
|---|---|---|
| Den Haag | 06 Dezember 91 | DUBOIS B.F.J. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
-----------------------------------------------------------
& : Mitglied der gleichen Patentfamilie, übereinstimmendes Dokument